(19) Europäisches Patentamt
European Patent Office
Office européen des brevets

(11) **EP 2 735 821 A1**

(12) **EUROPÄISCHE PATENTANMELDUNG**

(43) Veröffentlichungstag:
28.05.2014 Patentblatt 2014/22

(51) Int Cl.:
*F25B 15/14* (2006.01)   *F25B 15/06* (2006.01)

(21) Anmeldenummer: **13152498.5**

(22) Anmeldetag: **24.01.2013**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **23.11.2012   DE 102012023338**

(71) Anmelder: **Friedrich-Alexander-Universität
Erlangen-Nürnberg
91054 Erlangen (DE)**

(72) Erfinder: **Wölfel, René
91058 Erlangen (DE)**

(74) Vertreter: **Ehnis, Tobias et al
Dr. Gassner & Partner mbB
Patentanwälte
Marie-Curie-Strasse 1
91052 Erlangen (DE)**

(54) **Verfahren zum Entziehen thermischer Energie aus einem Medium**

(57)   Die Erfindung betrifft ein Verfahren zum Entziehen thermischer Energie aus einem ersten Medium und Übertragen dieser thermischer Energie auf ein zweites Medium mittels einer ersten Lösung eines ersten Stoffs in einem Lösungsmittel und einer zweiten Lösung eines zweiten Stoffs in dem Lösungsmittel, wobei die erste Lösung bei einer gegebenen Temperatur einen höheren Dampfdruck als die zweite Lösung aufweist, wobei die erste Lösung durch einen ersten Kreislauf (4) und die zweite Lösung durch einen zweiten Kreislauf (6) gefördert wird, wobei der erste (4) und der zweite Kreislauf (6) in einem ersten Bereich durch eine für den ersten und zweiten Stoff undurchlässige und für das Lösungsmittel durchlässige semipermeable Membran (13) voneinander getrennt sind und in einem zweiten Bereich in einem Behältnis (16) über eine Gasphase (18) miteinander in Verbindung stehen.

Fig. 1

EP 2 735 821 A1

**Beschreibung**

Die Erfindung betrifft ein Verfahren zum Entziehen thermischer Energie aus einem ersten Medium und Übertragen dieser thermischen Energie auf ein zweites Medium. Das Verfahren kann zu Kühlzwecken, beispielsweise bei einer Klimaanlage oder einem Kühlschrank, oder auch zu Heizzwecken bei einer Wärmepumpe eingesetzt werden. Weiterhin betrifft die Erfindung eine Vorrichtung zur Durchführung dieses Verfahrens.

Eine klassische Kompressionskältemaschine umfasst ein Kältemittel, das verdampft wird, wobei durch die vom Kältemittel aufgenommene Verdampfungswärme eine Kühlung erzielt wird. Das verdampfte Kältemittel wird dann üblicherweise mittels eines Kompressors auf einen höheren Druck gebracht und bei einer höheren Temperatur als bei der Verdampfung kondensiert. Dabei wird die bei der Verdampfung aufgenommene Wärme wieder abgegeben. Anschließend wird das verflüssigte Kältemittel wieder auf den Druck des Verdampfers entspannt.

Bei einer Absorptionskältemaschine ist kein Kompressor erforderlich. Das verdampfte Kältemittel wird bei dieser Kältemaschine in einem Absorber beim Druck des Verdampfens von einem flüssigen Sorptionsmittel absorbiert. Dabei wird Wärme freigesetzt. Anschließend wird das absorbierte Kältemittel in einem Austreiber beim Druck einer nachfolgend in einem Kondensator erfolgenden Kondensation durch Wärmezufuhr wieder vom Sorptionsmittel desorbiert. Ein Pumpen des flüssigen Sorptionsmittels mit absorbiertem Kältemittel erfordert weniger mechanische Energie als die Kompression des Kältemitteldampfs in der klassischen Kompressionskältemaschine. Der Energieverbrauch ist gegenüber der Kompressionskältemaschine jedoch nicht reduziert, da zusätzlich zur mechanischen Energie zur Desorption des Kältemittels Wärmeenergie zugeführt werden muss.

Die Energieeffizienz wird im Bereich der Klimatisierung häufig als Energieeffizienzverhältnis angegeben. Das Energieeffizienzverhältnis (Energy Efficiency Ratio = EER) berechnet sich wie folgt:

$$EER = \frac{P_c}{P_e}$$

wobei "$P_c$" die dem Raum entzogene Wärme in Watt und "$P_e$" die dafür aufgewendete elektrische Leistung in Watt ist. Übliche EER-Werte liegen im Bereich von 2,5 bis 3,1. Höhere Werte sind nur mit hohem Kostenaufwand zu erreichen.

Aus der EP 2 088 389 A1 ist eine Absorptionskältemaschine bekannt. Diese umfasst ein Arbeitsmedium, welches ein nicht flüchtiges Sorptionsmittel und ein flüchtiges Kältemittel enthält, und einen Absorber, in dem eine Dampfphase enthaltend Kältemittel und eine Flüssigphase enthaltend Sorptionsmittel durch eine semipermeable Membran voneinander getrennt sind, die für das Kältemittel durchlässig und für das Sorptionsmittel undurchlässig ist. Bei dem Kältemittel kann es sich um Wasser handeln. Bei dem Sorptionsmittel kann es sich um eine ionische Flüssigkeit handeln.

Aufgabe der vorliegenden Erfindung ist es, ein Verfahren zum Entziehen thermischer Energie aus einem ersten Medium und Übertragen dieser thermischen Energie auf ein zweites Medium und eine zur Durchführung des Verfahrens geeignete Vorrichtung anzugeben, welche mit verhältnismäßig geringem konstruktiven Aufwand eine relativ hohe Energieeffizienz bzw. einen hohen EER-Wert erreichen kann.

Erfindungsgemäß wird die Aufgabe durch ein Verfahren zum Entziehen thermischer Energie aus einem ersten Medium und Übertragen dieser thermischer Energie auf ein zweites Medium mittels einer ersten Lösung eines ersten Stoffs in einem Lösungsmittel und einer zweiten Lösung eines zweiten Stoffs in dem Lösungsmittel gelöst. Dabei weist die erste Lösung bei einer gegebenen Temperatur einen höheren Dampfdruck als die zweite Lösung auf. Der Dampfdruck der ersten Lösung kann dabei mindestens 1 mbar höher sein als der Dampfdruck der zweiten Lösung. Die erste Lösung wird durch einen ersten Kreislauf und die zweite Lösung durch einen zweiten Kreislauf gefördert. Dabei sind der erste und der zweite Kreislauf in einem ersten Bereich durch eine für den ersten und zweiten Stoff undurchlässige und für das Lösungsmittel durchlässige semipermeable Membran voneinander getrennt. In einem zweiten Bereich stehen der erste und der zweite Kreislauf in einem, insbesondere nach außen hin druckdichten, Behältnis über eine Gasphase miteinander in Verbindung, wobei in der Gasphase ein Druck vorliegt oder eingestellt wird, der mindestens so hoch ist, wie der Dampfdruck der zweiten Lösung in der Gasphase. Durch das Vorhandensein eines nach außen hin druckdichten bzw. geschlossenen Behältnisses kann der Druck im zweiten Bereich unabhängig von den Außenbedingungen eingestellt werden. Durch den höheren Dampfdruck der ersten Lösung gegenüber der zweiten Lösung und den Druck in der Gasphase, der mindestens so hoch ist, wie der Dampfdruck der zweiten Lösung, verdampft das Lösungsmittel im zweiten Bereich aus der ersten Lösung und wird von der zweiten Lösung absorbiert, wobei sich die erste Lösung abkühlt und die zweite Lösung erwärmt. Die thermische Energie wird dem ersten Medium von der ersten Lösung über einen ersten Wärmetauscher entzogen und von der zweiten Lösung über einen zweiten Wärmetauscher an das zweite Medium abgegeben. Der erste und der zweite Wärmetauscher sind jeweils unabhängig voneinander im zweiten Bereich oder in Flußrichtung nach dem zweiten und vor dem ersten Bereich angeordnet. Das Lösungsmittel gelangt im ersten Bereich dadurch von der zweiten Lösung durch die Membran zur ersten Lösung, dass

- auf einer Seite der Membran, die von der zweiten Lösung kontaktiert wird, ein höherer Druck anliegt als auf einer Seite der Membran, die von der ersten Lösung kontaktiert wird
und/oder

- die erste Lösung bei der gegebenen Temperatur einen höheren osmotischen Druck als die zweite Lösung aufweist.

Der osmotische Druck der ersten Lösung kann dabei mindestens 100 mbar höher sein als der osmotische Druck der zweiten Lösung. Wenn auf der Seite der Membran, die von der zweiten Lösung kontaktiert wird, ein höherer Druck anliegt als auf der Seite der Membran, die von der ersten Lösung kontaktiert wird, kann der osmotische Druck der ersten Lösung bei der gegebenen Temperatur auch niedriger sein als der osmotische Druck der zweiten Lösung.

Weil das Lösungsmittel durch die Membran von der zweiten Lösung zur ersten gelangt, ist es nicht erforderlich, zusätzlich Wärmeenergie für ein Austreiben des Lösungsmittels aus der zweiten Lösung aufzuwenden. Das erfindungsgemäße Verfahren ist dadurch sehr energieeffizient. Es ist lediglich erforderlich Energie für das Fördern der ersten und der zweiten Lösung in dem ersten und zweiten Kreislauf aufzuwenden. Für den Fall, dass der Flüssigkeitstransport über die semipermeable Membran nicht oder nicht ausschließlich durch Osmose bewirkt wird, ist ein zusätzlicher geringer Energieaufwand für eine Bereitstellung des höheren Drucks auf Seiten der zweiten Lösung im ersten Bereich erforderlich. Auch dann ist das erfindungsgemäße Verfahren jedoch sehr energieeffizient. Der höhere Druck auf Seiten der zweiten Lösung kann auch durch eine Absenkung des Drucks auf Seiten der ersten Lösung bewirkt werden. Der mechanische Aufwand für das Fördern der ersten Lösung und der zweiten Lösung und den ggf. erforderlichen Druckaufbau auf Seiten der zweiten Lösung bzw. eine Druckreduktion auf Seiten der ersten Lösung ist ebenfalls gering.

Der höhere Druck auf der Seite der Membran, die von der zweiten Lösung kontaktiert wird, kann beispielsweise durch einen höheren hydrostatischen Druck durch eine direkt oder indirekt auf der Membran lastende Flüssigkeitssäule bereitgestellt werden. Indirekt kann die Flüssigkeitssäule z. B. dadurch auf der Membran lasten, dass die Flüssigkeitssäule im Ausgleichsbehälter für die zweite Lösung aufgebaut wird und der erste Bereich auf der Seite der Membran, die von der zweiten Lösung kontaktiert wird, druckdicht ausgebildet ist.

Bei dem ersten und dem zweiten Medium kann es sich jeweils unabhängig voneinander um Luft oder Wasser oder ein sonstiges Medium handeln. Beispielsweise kann das erste Medium die Luft eines zu klimatisierenden Raums sein und das zweite Medium Luft außerhalb dieses Raums. Bei dem sonstigen Medium kann es sich beispielsweise um Sole handeln, mit der einem Erdreich thermische Energie zum Heizen entzogen wird.
Zum Ausgleich von Änderungen im Flüssigkeitsvolumen der ersten und/oder zweiten Lösung durch den Transport des Lösungsmittels durch die semipermeable Membran und über die Gasphase kann im ersten Kreislauf ein die erste Lösung enthaltender erster Ausgleichsbehälter und/oder im zweiten Kreislauf ein die zweite Lösung enthaltender zweiter Ausgleichsbehälter vorhanden sein.
Die semipermeable Membran kann aus einem Polymer, einem Zeolith oder Kohlenstoff bestehen oder ein Polymer, ein Zeolith oder Kohlenstoff umfassen. Bei dem Polymer kann es sich um ein Polyamid handeln.
Die erste Lösung kann mittels einer ersten Pumpe durch den ersten Kreislauf und die zweite Lösung mittels einer zweiten Pumpe durch den zweiten Kreislauf gefördert werden. Bei einer Ausgestaltung des erfindungsgemäßen Verfahrens wird der erste Bereich durch einen druckdichten Behälter gebildet, in welchem die Membran in einen ersten von der ersten Lösung durchströmten Teilbereich von einem zweiten von der zweiten Lösung durchströmten Teilbereich trennt, wobei an einer Eintrittsöffnung für die erste Lösung im ersten Teilbereich und/oder an einer Austrittsöffnung für die zweite Lösung im zweiten Teilbereich, insbesondere jeweils unabhängig voneinander, eine Drossel zum Regulieren eines Durchflussvolumens pro Zeiteinheit oder ein Druckhalteventil zum Regulieren eines Staudrucks vorgesehen ist und/oder wobei die erste Lösung mittels einer/der ersten Pumpe durch den ersten Kreislauf und die zweite Lösung mittels einer/der zweiten Pumpe durch den zweiten Kreislauf gefördert wird, wobei die zweite Pumpe an der Membran einen höheren Druck aufbaut als die erste Pumpe. Die Leistung der ersten Pumpe und/oder der zweiten Pumpe kann dazu regulierbar sein, so dass durch entsprechende Regulierung der Pumpleistung ein gewünschtes Druckverhältnis zwischen der zweiten und der ersten Lösung an der Membran eingestellt werden kann.
Im zweiten Bereich kann aus der ersten Lösung mindestens ein erster Fluidfilm und aus der zweiten Lösung mindestens ein zweiter Fluidfilm gebildet werden, so dass der erste und der zweite Fluidfilm jeweils eine Phasengrenze zur Gasphase hin aufweist. Durch die so jeweils bereitgestellte großflächige Phasengrenze zwischen der ersten Lösung und der Gasphase und der zweiten Lösung und der Gasphase ist ein effektives Verdampfen des Lösungsmittels aus der ersten Lösung und ein effektives Aufnehmen des Lösungsmittels in die zweite Lösung gewährleistet. Der erste Fluidfilm kann beispielsweise als mindestens ein an mindestens einer ersten Oberfläche herabfließender erster Fallfilm und der zweite Fluidfilm als mindestens ein an mindestens einer zweiten Oberfläche herabfließender zweiter Fallfilm ausgebildet sein. Alternativ kann der erste Fluidfilm auf einer Seite einer Dampfpermeationsmembran und der zweite Fluidfilm auf einer anderen Seite der Dampfpermeationsmembran entlang geführt werden. Die Gasphase befindet sich dabei in Poren der Dampfpermeationsmembran, die so gewählt wird, dass die jeweilige Oberflächenspannung der ersten und die zweiten Lösung verhindert, dass diese Lösungen in die Poren der Dampfpermeationsmembran eindringen. Da der durch Diffusion in der Gasphase von den Lösungsmittelmolekülen zurückzulegende Weg dabei sehr kurz ist, findet an einer solchen Dampfpermeationsmembran ein sehr effektiver Übergang des Lösungsmittels von der ersten auf die zweite Lösung statt.

Im zweiten Bereich ist zur effektiven Ermöglichung des Übergangs des Lösungsmittels von der ersten auf die zweite Lösung auch jedes andere Verfahren, welches jeweils eine großflächige Phasengrenze zwischen der ersten Lösung und der Gasphase und der zweiten Lösung und der Gasphase bereitstellt, geeignet. Beispielsweise könnte die erste und die zweite Lösung dazu jeweils ein Faservlies oder eine Filtermatte durchströmen. Weiterhin kann die Gasphase in dem zweiten Bereich, beispielsweise mittels eines Ventilators, bewegt werden, um den Übertritt vom Lösungsmittel aus der ersten Lösung in die Gasphase und von der Gasphase in die zweite Lösung zu fördern.

Das Lösungsmittel kann ein polares Lösungsmittel sein. Bei einem polaren Lösungsmittel hat das Lösen eines polaren oder ionischen ersten und zweiten Stoffs jeweils deutliche Auswirkungen auf den Dampfdruck der resultierenden ersten und zweiten Lösung. Unter einem polaren Lösungsmittel kann ein Lösungsmittel verstanden werden, welches einen $E_T(30)$-Wert über 28 [kcal/mol], insbesondere über 38 [kcal/mol], insbesondere über 48 [kcal/mol], aufweist. Der $E_T(30)$-Wert ist ein Maß für die Polarität eines Stoffs. Er wird bei Flüssigkeiten bei 25 °C und 1 bar Druck mit Hilfe des negativ solvatochromen Pyridinium-N-Phenolat-Betainfarbstoffs $E_T(30)$ bestimmt. Bei Stoffen, die bei 1 bar gasförmig vorliegen, wird der Wert bei einem Druck oberhalb des Verflüssigungsdrucks gemessen.

Das Lösungsmittel kann auch ein Lösungsmittel mit einer molaren Masse unter 65 [g/mol], insbesondere unter 47 [g/mol], insbesondere unter 33 [g/mol] sein. Solche Lösungsmittel verdampfen gut im zweiten Bereich.

Das Lösungsmittel kann Wasser, Methanol, Ethanol, n-Propanol, iso-Propanol, Kohlenstoffdioxid, Ammoniak, Methylamin oder eine Mischung aus mindestens zwei dieser Stoffe umfassen. Damit Stoffe, die unter Normalbedingungen gasförmig vorliegen, beim erfindungsgemäßen Verfahren als flüssiges Lösungsmittel eingesetzt werden können, kann das gesamte Verfahren unter gegenüber Normalbedingungen erhöhtem Druck durchgeführt werden.

Der zweite Stoff kann so ausgewählt sein, dass er bei der gegebenen Temperatur eine Löslichkeit von mindestens 0,01, insbesondere mindestens 0,05, insbesondere mindestens 0,1, insbesondere mindestens 0,2 mol/mol des Lösungsmittels in dem Lösungsmittel aufweist. Ein Stoff mit einer derartigen Löslichkeit kann in dem Lösungsmittel in so hoher Konzentration gelöst werden, dass dies eine starke Herabsetzung des Dampfdrucks der resultierenden zweiten Lösung bewirkt.

Der Erfinder des Verfahrens hat festgestellt, dass der Dampfdruck und der osmotische Druck von zwei konzentrierten Lösungen unterschiedlicher Salze in ein und demselben Lösungsmittel jeweils einen Transport des Lösungsmittels in entgegengesetzte Richtungen bewirken können. Abhängig ist die Richtung des Transports dabei von der Art der Kontaktierung der Lösungen. Bei einer Kontaktierung über eine Gasphase strömt das Lösungsmittel von der Lösung, die den höheren Dampfdruck aufweist, zu der Lösung, die den niedrigeren Dampfdruck aufweist. Bei einer Kontaktierung über eine für das Lösungsmittel durchgängige semipermeable Membran strömt das Lösungsmittel dagegen stets von der Lösung, die den niedrigeren osmotischen Druck aufweist, zu der Lösung, die den höheren osmotischen Druck aufweist.

Beim erfindungsgemäßen Verfahren kann dies dadurch erreicht werden, dass der zweite Stoff ein möglichst stark auf das Lösungsmittel aktivitätssenkend wirkendes Salz aus einwertigen Ionen ist. Die resultierende zweite Lösung weist dadurch einen vergleichsweise niedrigen osmotischen Druck und einen vergleichsweise niedrigen Dampfdruck auf. Der erste Stoff kann dann ein auf das Lösungsmittel weniger aktivitätssenkend wirkendes Salz sein, das einen möglichst hohen osmotischen Druck der resultierenden ersten Lösung bewirkt. Das kann insbesondere ein Salz aus mindestens einem mehrwertigen Ion und einwertigen Gegenionen sein. Je weniger aktivitätssenkend ein Stoff auf ein Lösungsmittel wirkt, desto weniger senkt dieser Stoff den Dampfdruck der resultierenden Lösung dieses Stoffs.

Kontaktiert man die beiden Lösungen über die Gasphase, so verdampft das Lösungsmittel aus der ersten Lösung und wird von der zweiten Lösung absorbiert. Durch das Verdampfen des Lösungsmittels kühlt sich die erste Lösung ab, während sich die zweite Lösung durch das Absorbieren erwärmt.

Kontaktiert man die beiden Lösungen über eine für das Lösungsmittel durchlässige semipermeable Membran, so bewirkt die osmotische Triebkraft einen Transport des Lösungsmittels aus der zweiten Lösung durch die Membran in die erste Lösung.

Bei einer Ausgestaltung des Verfahrens sind der erste Stoff und der zweite Stoff daher so gewählt, dass ein Lösen des ersten Stoffs in dem Lösungsmittel den Dampfdruck des Lösungsmittels weniger stark absenkt als ein Lösen des zweiten Stoffs in dem Lösungsmittel und gleichzeitig in der ersten Lösung einen höheren osmotischen Druck bewirkt als das Lösen des zweiten Stoffs in dem Lösungsmittel in der zweiten Lösung bewirkt.

Dadurch ist das Verfahren besonders energieeffizient, weil ein Flüssigkeitstransport von der zweiten Lösung zur ersten Lösung durch die semipermeable Membran hindurch auch stattfindet, ohne dass dazu auf der Seite der Membran, die von der zweiten Lösung kontaktiert wird, ein höherer Druck als auf der anderen Seite der Membran anliegen muss. Es ist daher nicht erforderlich, Energie für den Aufbau des genannten Drucks aufzuwenden. Es ist lediglich erforderlich, die erste und die zweite Lösung jeweils im ersten und zweiten Kreislauf zu fördern. Für ein solches Umwälzen ist lediglich die Überwindung von Strömungswiderstand erforderlich.

Der erste und/oder der zweite Stoff kann jeweils ein Salz oder eine Mischung von Salzen sein. Insbesondere kann es sich bei dem Salz um eine ionische Flüssigkeit und bei der Mischung von Salzen um eine Mischung von ionischen Flüssigkeiten handeln.

Der erste Stoff kann ein Salz aus mindestens einem mehrwertigen Ion und einwertigen Gegenionen, insbesondere aus mindestens zwei der Kationen Wasserstoffion, Lithiumion, Natriumion, Kaliumion oder einer Mischung aus mindestens zwei dieser Kationen und mindestens einem der Anionen Phosphation, Sulfation, Oxalation, Malonation, 2-Hydroxymalonation, Tartration, Tartronation oder einer Mischung aus mindestens zwei dieser Anionen sein. Der zweite Stoff kann ein Salz aus mindestens einem der Kationen 1,3-Dimethylimidazoliumion, 1-Ethoxy-3-methylimidazoliumion, Tetramethylammoniumion, N-Ethoxy-N,N,N-trimethyl-ammoniumion, Cäsiumion oder einer Mischung aus mindestens zwei dieser Kationen und mindestens einem der Anionen Formiation, Acetation, Propionation, Bromidion, Chloridion, Fluoridion, Hydroxidion oder einer Mischung aus mindestens zwei dieser Anionen oder ein Salz aus Lithiumion und mindestens einem der Anionen Iodidion, Bromidion, Hydroxidion oder einer Mischung aus mindestens zwei dieser Anionen sein. Bei diesen Kombinationen aus erstem und zweiten Stoff senkt ein Lösen des ersten Stoffs in dem Lösungsmittel in geeigneter Konzentration den Dampfdruck des Lösungsmittels weniger stark ab als ein Lösen des zweiten Stoffs in dem Lösungsmittel in geeigneter Konzentration. Gleichzeitig kann dadurch in der ersten Lösung ein höherer osmotischer Druck als in der zweiten Lösung erreicht werden.

Die Erfindung betrifft weiterhin eine Vorrichtung zur Durchführung des erfindungsgemäßen Verfahrens, umfassend

- einen mittels Flüssigkeitsleitungen gebildeten ersten und einen zweiten Kreislaufs,

- eine erste Lösung eines ersten Stoffs in einem Lösungsmittel im ersten Kreislauf und eine zweite Lösung eines zweiten Stoffs in dem Lösungsmittel im zweiten Kreislauf, wobei die erste Lösung bei einer gegebenen Temperatur einen höheren Dampfdruck als die zweite Lösung aufweist,

- einen Behälter zur Aufnahme von Flüssigkeit mit einer semipermeablen Membran, die einen ersten Teilbereich des Behälters von einem zweiten Teilbereich des Behälters trennt, wobei der erste Teilbereich in den ersten und der zweite Teilbereich in den zweiten Kreislauf integriert ist,

- eine in einem Behältnis enthaltene Gasphase mit einem in den ersten Kreislauf integrierten Verdampfer, der eine zur Gasphase hin offene Oberfläche der ersten Lösung bereitstellt, und einen in den zweiten Kreislauf integrierten Absorber, der eine zur Gasphase hin offene Oberfläche der zweiten Lösung bereitstellt, so dass Moleküle des Lösungsmittels am Verdampfer aus der ersten Lösung in die Gasphase übertreten und am Absorber aus der Gasphase in die zweite Lösung übertreten können, wobei in der Gasphase ein Druck, der mindestens so hoch ist, wie der Dampfdruck der zweiten Lösung in der Gasphase, vorliegt oder eingestellt werden kann,

- einen mit einem ersten Medium und der ersten Lösung in Kontakt stehenden und in den ersten Kreislauf integrierten ersten Wärmetauscher zum Übertragen thermischer Energie vom ersten Medium auf die erste Lösung und einen mit einem zweiten Medium und der zweiten Lösung in Kontakt stehenden und in den zweiten Kreislauf integrierten zweiten Wärmetauscher zum Übertragen thermischer Energie von der zweiten Lösung auf das zweite Medium, wobei der erste Wärmetauscher im Verdampfer oder in Flussrichtung der ersten Lösung nach dem Verdampfer und vor dem Behälter angeordnet ist und der zweite Wärmetauscher im Absorber oder in Flussrichtung der zweiten Lösung nach dem Absorber und vor dem Behälter angeordnet ist und

- eine in den ersten Kreislauf integrierte erste Pumpe zum Fördern der ersten Lösung durch den ersten Kreislauf und eine in den zweiten Kreislauf integrierte zweite Pumpe zum Fördern der zweiten Lösung durch den zweiten Kreislauf.

Die Bezeichnungen "Verdampfer" und "Absorber" sind dabei rein funktionell zu verstehen. Der Verdampfer und der Absorber können auch durch ein einziges Bauteil, wie z. B. eine auf einer Seite von der ersten Lösung und auf der anderen Seite von der zweiten Lösung überströmte Dampfpermeationsmembran, realisiert werden.

Die erste Lösung kann bei der gegebenen Temperatur einen höheren osmotischen Druck aufweisen als die zweite Lösung.

Der Behälter kann druckdicht ausgebildet sein. Dadurch kann im zweiten Teilbereich des Behälters, beispielsweise durch eine höhere Pumpleistung der zweiten Pumpe, ein höherer Druck bereitgestellt werden, als im ersten Teilbereich des Behälters. Die Bereitstellung eines höheren Drucks im zweiten Teilbereich ist jedoch auch bei einem nicht druckdicht ausgebildeten, z. B. nach oben offenen, Behälter möglich. Dazu kann beispielsweise die zweite Lösung im zweiten Teilbereich eine höhere Flüssigkeitssäule über der Membran bilden als die erste Lösung im ersten Teilbereich.

An einer Eintrittsöffnung für die erste Lösung im ersten Teilbereich und/oder an einer Austrittsöffnung für die zweite Lösung im zweiten Teilbereich kann, insbesondere jeweils unabhängig voneinander, eine Drossel zum Regulieren eines Durchflussvolumens pro Zeiteinheit oder ein Druckhalteventil zum Regulieren eines Staudrucks vorgesehen sein. Alternativ oder zusätzlich kann die zweite Pumpe oder die erste Pumpe so ausgelegt sein, dass die zweite Pumpe einen höheren Druck aufbauen kann als die erste Pumpe. Dies kann beispielsweise dadurch erreicht werden, dass die Leistung der ersten und/oder der zweiten Pumpe regulierbar ist.

Die semipermeable Membran kann aus einem Polymer, einem Zeolith oder Kohlenstoff bestehen oder ein Polymer, ein Zeolith oder Kohlenstoff umfassen. Im ersten Kreislauf kann ein erster Ausgleichsbehälter und/oder im zweiten Kreislauf ein zweiter Ausgleichsbehälter zum Ausgleich von Änderungen im Flüssigkeitsvolumen der ersten und/oder der zweiten Lösung vorhanden sein. Der Verdampfer kann durch eine weitere Vorrichtung gebildet werden, an der die erste Lösung einen ersten Fluidfilm bilden kann und der Absorber kann durch die weitere oder eine zusätzliche Vorrichtung gebildet werden, an der die zweite Lösung einen zweiten Fluidfilm bilden kann. Bei der weiteren Vorrichtung kann es sich um eine Dampfpermeationsmembran handeln, an welcher der erste Fluidfilm auf einer Seite und der zweite Fluidfilm auf der anderen Seite der Dampfpermeationsmembran gebildet wird.

Nachfolgend wird die Erfindung anhand eines Ausführungsbeispiels und der Zeichnungen näher erläutert. Es zeigen:

Fig. 1   eine schematische Darstellung einer Durchführung des erfindungsgemäßen Verfahrens in einer erfindungsgemäßen Vorrichtung,

Fig. 2   die Auswirkungen des Lösens von 1,3-Dimethylimidazoliumpropionat (MMIM-Prop) als zweiten Stoff und $K_2HPO_4$ als ersten Stoff in Wasser als Lösungsmittel auf den Dampfdruck von Wasser und

Fig. 3   die Auswirkungen des Lösens von 1,3-Dimethylimidazoliumpropionat (MMIM-Prop) als zweiten Stoff und $K_2HPO_4$ als ersten Stoff in Wasser als Lösungsmittel auf den osmotischen Druck der resultierenden Lösungen.

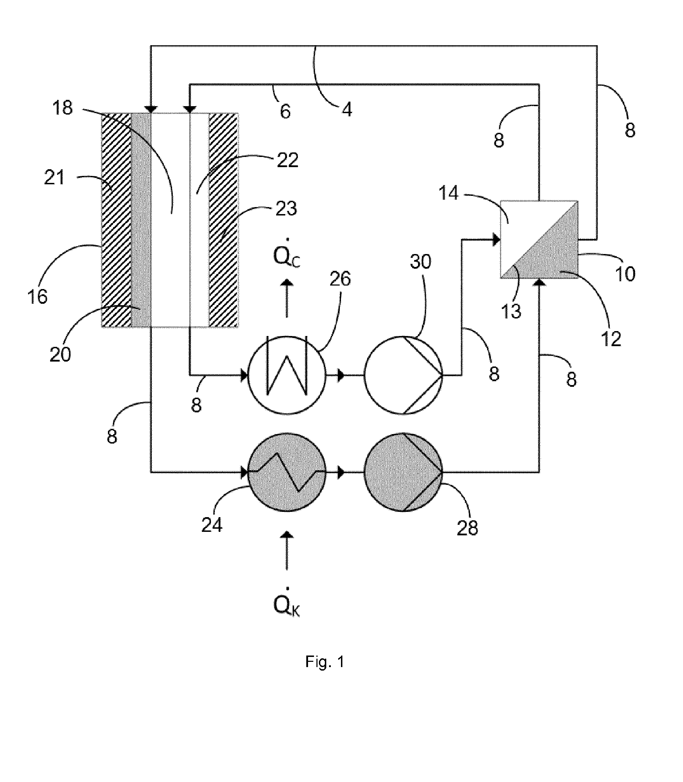

Die in Fig. 1 dargestellte Vorrichtung zeigt einen ersten Kreislauf 4 und einen zweiten Kreislauf 6, der jeweils mittels Flüssigkeitsleitungen 8 gebildet wird. Im ersten Kreislauf 4 zirkuliert eine erste Lösung und im zweiten Kreislauf 6 eine zweite Lösung. In dem Behälter 10 durchströmt die erste Lösung einen ersten Teilbereich 12 und die zweite Lösung einen zweiten Teilbereich 14, wobei die beiden Teilbereiche durch die semipermeable Membran 13 voneinander getrennt sind. Durch einen höheren Druck im zweiten Teilbereich 14 und/oder einen höheren osmotischen Druck der ersten Lösung im ersten Teilbereich 12 strömt das Lösungsmittel durch die semipermeable Membran 13 vom zweiten Teilbereich 14 in den ersten Teilbereich 12. Die dadurch verdünnte erste Lösung strömt durch die Flüssigkeitsleitung 8 in das Behältnis 16. Gleichzeitig strömt die durch den Lösungsmittelentzug konzentrierte zweite Lösung durch die Flüssigkeitsleitung 8 in das Behältnis 16. In dem Behältnis 16 befindet sich eine Gasphase 18 und ein von der ersten Lösung durchströmter erster Fallfilm 20 auf einem ersten Fallfilmträger 21 und ein von der zweiten Lösung durchströmter zweiter Fallfilm 22 auf einem zweiten Fallfilmträger 23. Durch den höheren Dampfdruck der ersten Lösung gegenüber der zweiten Lösung und einem Druck der Gasphase 18 der mindestens so hoch ist, wie der Dampfdruck der zweiten Lösung, geht ein Teil des Lösungsmittels im ersten Fallfilm 20 aus der ersten Lösung in die Gasphase 18 über und wird im zweiten Fallfilm 22 von der zweiten Lösung aus der Gasphase 18 absorbiert. Dabei kühlt sich die erste Lösung ab, während sich die zweite Lösung erwärmt.

Die erste Lösung strömt danach durch die Flüssigkeitsleitung 8 zum ersten Wärmetauscher 24, wo sie durch Entziehen von thermischer Energie aus einem ersten Medium wieder aufgewärmt wird. Die zweite Lösung strömt aus dem zweiten Fallfilm 22 durch die Flüssigkeitsleitung 8 in den zweiten Wärmetauscher 26, wo sie thermische Energie an ein zweites Medium abgibt. Aus dem ersten Wärmetauscher 24 und dem zweiten Wärmetauscher 26 strömen die erste Lösung und die zweite Lösung jeweils zur ersten Pumpe 28 und zur zweiten Pumpe 30, welche die erste Lösung und die zweite Lösung jeweils in den ersten Teilbereich 12 und den zweiten Teilbereich 14 des Behälters 10 pumpt. Bei diesem Prozess ist es lediglich erforderlich den Strömungswiderstand der Flüssigkeit zu überwinden und den hydrostatischen Druck zur Realisierung der beiden Fallfilme 20, 22 bereitzustellen und ggf. im zweiten Teilbereich 14 des Behälters 10 einen höheren Druck aufzubauen als im ersten Teilbereich 12 des Behälters 10. Das gesamte Verfahren ermöglicht dadurch mit verhältnismäßig geringem Energieaufwand ein Entziehen von Wärme aus einem ersten Medium und ein Übertragen dieser Wärme auf ein zweites Medium.

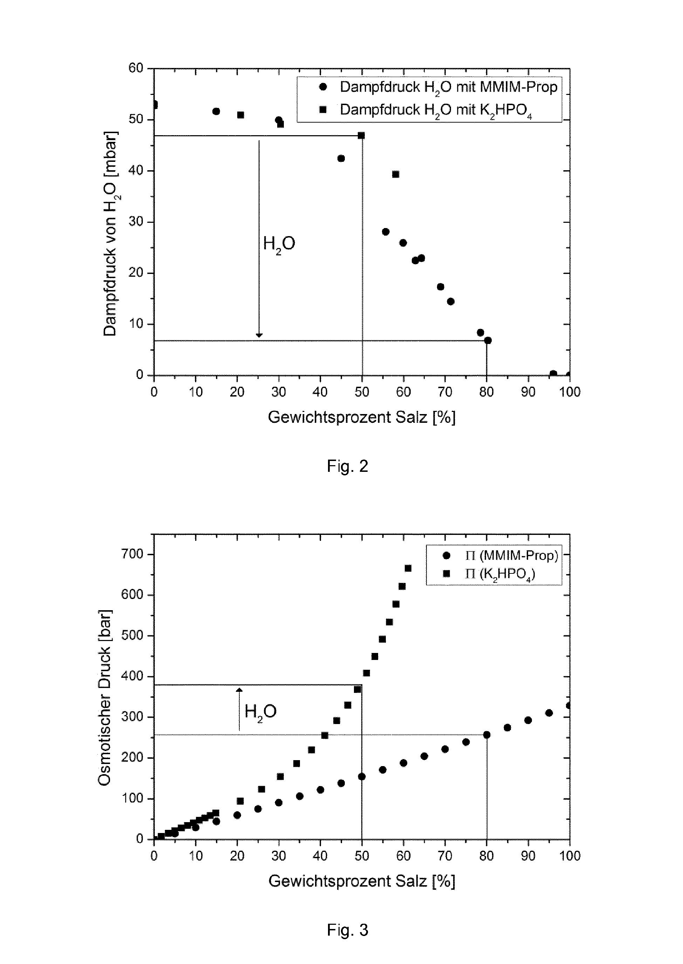

Fig. 2 zeigt, dass der Zusatz von 1,3-Dimethylimidazoliumpropionat als zweiter Stoff den Dampfdruck von Wasser als Lösungsmittel deutlich stärker reduziert als der Zusatz von $K_2HPO_4$ als erster Stoff.

Fig. 3 zeigt, dass $K_2HPO_4$ den osmotischen Druck von Wasser stärker erhöht als der Zusatz von 1,3-Dimethylimidazoliumpropionat. Bei den in Fig. 2 dargestellten Werten und den Werten des osmotischen Drucks der $K_2HPO_4$-Lösung handelt es sich um Messwerte, bei den Werten des osmotischen Drucks der 1,3-Dimethylimidazoliumpropionat-Lösung handelt es sich um berechnete Werte.

Mit Wasser als Lösungsmittel, 1,3-Dimethylimidazoliumpropionat als zweiten Stoff in einer Konzentration von 80 Gew.-% und $K_2HPO_4$ als ersten Stoff in einer Konzentration von 50 Gew.-% kann das erfindungsgemäße Verfahren betrieben werden, ohne dass im zweiten Teilbereich 14 des Behälters 10 ein höherer Druck anliegen muss als im ersten Teilbereich 12 des Behälters 10. Das Verfahren kann dadurch besonders energieeffizient durchgeführt werden.

Bezugszeichenliste

| | |
|---|---|
| 4 | erster Kreislauf |
| 6 | zweiter Kreislauf |
| 8 | Flüssigkeitsleitung |
| 10 | Behälter |
| 12 | erster Teilbereich |
| 13 | semipermeable Membran |
| 14 | zweiter Teilbereich |
| 16 | Behältnis |
| 18 | Gasphase |
| 20 | erster Fallfilm |
| 21 | erster Fallfilmträger |
| 22 | zweiter Fallfilm |
| 23 | zweiter Fallfilmträger |
| 24 | erster Wärmetauscher |
| 26 | zweiter Wärmetauscher |
| 28 | erste Pumpe |
| 30 | zweite Pumpe |

**Patentansprüche**

1. Verfahren zum Entziehen thermischer Energie aus einem ersten Medium und Übertragen dieser thermischer Energie auf ein zweites Medium mittels einer ersten Lösung eines ersten Stoffs in einem Lösungsmittel und einer zweiten Lösung eines zweiten Stoffs in dem Lösungsmittel, wobei die erste Lösung bei einer gegebenen Temperatur einen höheren Dampfdruck als die zweite Lösung aufweist, wobei die erste Lösung durch einen ersten Kreislauf (4) und die zweite Lösung durch einen zweiten Kreislauf (6) gefördert wird, wobei der erste (4) und der zweite Kreislauf (6) in einem ersten Bereich durch eine für den ersten und zweiten Stoff undurchlässige und für das Lösungsmittel durchlässige semipermeable Membran (13) voneinander getrennt sind und in einem zweiten Bereich in einem Behältnis (16) über eine Gasphase (18) miteinander in Verbindung stehen, wobei in der Gasphase (18) ein Druck vorliegt oder eingestellt wird, der mindestens so hoch ist, wie der Dampfdruck der zweiten Lösung, wobei das Lösungsmittel im zweiten Bereich aus der ersten Lösung verdampft und von der zweiten Lösung absorbiert wird, wobei sich die erste Lösung abkühlt und die zweite Lösung erwärmt, wobei die thermische Energie dem ersten Medium von der ersten Lösung über einen ersten Wärmetauscher (24) entzogen und von der zweiten Lösung über einen zweiten Wärmetauscher (26) an das zweite Medium abgegeben wird, wobei der erste (24) und der zweite Wärmetauscher (26) jeweils unabhängig voneinander im zweiten Bereich oder in Flußrichtung nach dem zweiten und vor dem ersten Bereich angeordnet sind, wobei das Lösungsmittel im ersten Bereich dadurch von der zweiten Lösung durch die Membran (13) zur ersten Lösung gelangt, dass

   - auf einer Seite der Membran (13), die von der zweiten Lösung kontaktiert wird, ein höherer Druck anliegt als auf einer Seite der Membran (13), die von der ersten Lösung kontaktiert wird und/oder
   - die erste Lösung bei der gegebenen Temperatur einen höheren osmotischen Druck als die zweite Lösung aufweist.

2. Verfahren nach Anspruch 1, wobei die erste Lösung mittels einer ersten Pumpe (28) durch den ersten Kreislauf (4) und die zweite Lösung mittels einer zweiten Pumpe (30) durch den zweiten Kreislauf (6) gefördert wird.

3. Verfahren nach einem der vorhergehenden Ansprüche, wobei der erste Bereich durch einen druckdichten Behälter (10) gebildet wird, in welchem die Membran (13) einen ersten von der ersten Lösung durchströmten Teilbereich (12) von einem zweiten von der zweiten Lösung durchströmten Teilbereich (14) trennt, wobei an einer Eintrittsöffnung für die erste Lösung im ersten Teilbereich (12) oder/und an einer Austrittsöffnung für die zweite Lösung im zweiten Teilbereich (14), insbesondere jeweils unabhängig voneinander, eine Drossel zum Regulieren eines Durchflussvolumens pro Zeiteinheit oder ein Druckhalteventil zum Regulieren eines Staudrucks vorgesehen ist und/oder wobei die erste Lösung mittels einer/der ersten Pumpe (28) durch den ersten Kreislauf (4) und die zweite Lösung mittels einer/der zweiten Pumpe (30) durch den zweiten Kreislauf (6) gefördert wird, wobei die zweite Pumpe (30) an der Membran (13) einen höheren Druck aufbaut als die erste Pumpe (28).

4. Verfahren nach einem der vorhergehenden Ansprüche, wobei im zweiten Bereich aus der ersten Lösung mindestens ein erster Fluidfilm (20) und aus der zweiten Lösung mindestens ein zweiter Fluidfilm (22) gebildet wird, so dass der erste (20) und der zweite Fluidfilm (22) jeweils eine Phasengrenze zur Gasphase (18) hin aufweist.

**5.** Verfahren nach einem der vorhergehenden Ansprüche, wobei das Lösungsmittel ein polares Lösungsmittel oder ein Lösungsmittel mit einer molaren Masse unter 65 [g/mol], insbesondere unter 47 [g/mol], insbesondere unter 33 [g/mol], insbesondere Wasser, Methanol, Ethanol, n-Propanol, iso-Propanol, Kohlenstoffdioxid, Ammoniak, Methylamin oder eine Mischung aus mindestens zwei dieser Stoffe umfasst.

**6.** Verfahren nach einem der vorhergehenden Ansprüche, wobei der zweite Stoff bei der gegebenen Temperatur eine Löslichkeit von mindestens 0,01, insbesondere mindestens 0,05, insbesondere mindestens 0,1, insbesondere mindestens 0,2 mol/mol des Lösungsmittels in dem Lösungsmittel aufweist.

**7.** Verfahren nach einem der vorhergehenden Ansprüche, wobei der erste Stoff und der zweite Stoff so gewählt sind, dass ein Lösen des ersten Stoffs in dem Lösungsmittel den Dampfdruck des Lösungsmittels weniger stark absenkt als ein Lösen des zweiten Stoffs in dem Lösungsmittel und gleichzeitig in der ersten Lösung einen höheren osmotischen Druck bewirkt als das Lösen des zweiten Stoffs in dem Lösungsmittel in der zweiten Lösung bewirkt.

**8.** Verfahren nach einem der vorhergehenden Ansprüche, wobei der erste und/oder der zweite Stoff jeweils ein Salz oder eine Mischung von Salzen ist.

**9.** Verfahren nach Anspruch 8, wobei der erste Stoff ein Salz aus mindestens einem mehrwertigen Ion und einwertigen Gegenionen, insbesondere aus mindestens zwei der Kationen Wasserstoffion, Lithiumion, Natriumion, Kaliumion oder einer Mischung aus mindestens zwei dieser Kationen und mindestens einem der Anionen Phosphation, Sulfation, Oxalation, Malonation, 2-Hydroxymalonation, Tartration, Tartronation oder einer Mischung aus mindestens zwei dieser Anionen ist und/oder der zweite Stoff ein Salz aus mindestens einem der Kationen 1,3-Dimethylimidazoliumion, 1-Ethoxy-3-methylimidazoliumion, Tetramethylammoniumion, N-Ethoxy-N,N,N-trimethylammoniumion, Cäsiumion oder einer Mischung aus mindestens zwei dieser Kationen und mindestens einem der Anionen Formiation, Acetation, Propionation, Bromidion, Chloridion, Fluoridion, Hydroxidion oder einer Mischung aus mindestens zwei dieser Anionen oder ein Salz aus Lithiumion und mindestens einem der Anionen Iodidion, Bromidion, Hydroxidion oder einer Mischung aus mindestens zwei dieser Anionen ist.

**10.** Vorrichtung zur Durchführung eines Verfahrens nach einem der vorhergehenden Ansprüche, umfassend

- Flüssigkeitsleitungen (8) zur Bildung eines ersten (4) und eines zweiten Kreislaufs (6),
- eine erste Lösung eines ersten Stoffs in einem Lösungsmittel im ersten Kreislauf (4) und eine zweite Lösung eines zweiten Stoffs in dem Lösungsmittel im zweiten Kreislauf (6), wobei die erste Lösung bei einer gegebenen Temperatur einen höheren Dampfdruck als die zweite Lösung aufweist,
- einen Behälter (10) zur Aufnahme von Flüssigkeit mit einer semipermeablen Membran (13), die einen ersten Teilbereich (12) des Behälters (10) von einem zweiten Teilbereich (14) des Behälters (10) trennt, wobei der erste Teilbereich (12) in den ersten (4) und der zweite Teilbereich (14) in den zweiten Kreislauf (6) integriert ist,
- eine in einem Behältnis (16) enthaltene Gasphase (18) mit einem in den ersten Kreislauf (4) integrierten Verdampfer, der eine zur Gasphase (18) hin offene Oberfläche der ersten Lösung bereitstellt, und einen in den zweiten Kreislauf (6) integrierten Absorber, der eine zur Gasphase (18) hin offene Oberfläche der zweiten Lösung bereitstellt, so dass Moleküle des Lösungsmittels am Verdampfer aus der ersten Lösung in die Gasphase (18) übertreten und am Absorber aus der Gasphase (18) in die zweite Lösung übertreten können, wobei in der Gasphase (18) ein Druck, der mindestens so hoch ist, wie der Dampfdruck der zweiten Lösung, vorliegt oder eingestellt werden kann,
- einen mit einem ersten Medium und der ersten Lösung in Kontakt stehenden und in den ersten Kreislauf (4) integrierten ersten Wärmetauscher (24) zum Übertragen thermischer Energie vom ersten Medium auf die erste Lösung und einen mit einem zweiten Medium und der zweiten Lösung in Kontakt stehenden und in den zweiten Kreislauf (6) integrierten zweiten Wärmetauscher (26) zum Übertragen thermischer Energie von der zweiten Lösung auf das zweite Medium, wobei der erste Wärmetauscher (24) im Verdampfer oder in Flussrichtung der ersten Lösung nach dem Verdampfer und vor dem Behälter (10) angeordnet ist und der zweite Wärmetauscher (26) im Absorber oder in Flussrichtung der zweiten Lösung nach dem Absorber und vor dem Behälter (10) angeordnet ist und
- eine in den ersten Kreislauf (4) integrierte erste Pumpe (28) zum Fördern der ersten Lösung durch den ersten Kreislauf (4) und eine in den zweiten Kreislauf (6) integrierte zweite Pumpe (30) zum Fördern der zweiten Lösung durch den zweiten Kreislauf (6).

**11.** Vorrichtung nach Anspruch 10, wobei die erste Lösung bei der gegebenen Temperatur einen höheren osmotischen Druck als die zweite Lösung aufweist.

**12.** Vorrichtung nach Anspruch 10 oder 11, wobei der Behälter (10) druckdicht ausgebildet ist.

**13.** Vorrichtung nach einem der Ansprüche 10 bis 12, wobei an einer Eintrittsöffnung für die erste Lösung im ersten Teilbereich (12) und/oder an einer Austrittsöffnung für die zweite Lösung im zweiten Teilbereich (14), insbesondere jeweils unabhängig voneinander, eine Drossel zum Regulieren eines Durchflussvolumens pro Zeiteinheit oder ein Druckhalteventil zum Regulieren eines Staudrucks vorgesehen ist und/oder wobei die zweite Pumpe (30) oder die erste Pumpe (28) so ausgelegt ist, dass die zweite Pumpe (30) einen höheren Druck aufbauen kann als die erste Pumpe (28).

**14.** Vorrichtung nach einem der Ansprüche 10 bis 13, wobei die semipermeable Membran (13) aus einem Polymer, einem Zeolith oder Kohlenstoff besteht oder ein Polymer, ein Zeolith oder Kohlenstoff umfasst.

**15.** Vorrichtung nach einem der Ansprüche 10 bis 14, wobei der Verdampfer durch eine weitere Vorrichtung gebildet wird, an der die erste Lösung einen ersten Fluidfilm (20) bilden kann und der Absorber durch die weitere oder eine zusätzliche Vorrichtung gebildet wird, an der die zweite Lösung einen zweiten Fluidfilm (22) bilden kann.

Fig. 1

EP 2 735 821 A1

10

Fig. 2

Fig. 3

Europäisches
Patentamt

European
Patent Office

Office européen
des brevets

**EUROPÄISCHER RECHERCHENBERICHT**

**Nummer der Anmeldung**

EP 13 15 2498

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 195 11 709 A1 (KLEMENT ARNE [DE])<br>2. Oktober 1996 (1996-10-02)<br>* Spalte 1 - Spalte 6; Abbildungen 1-9 *<br>----- | 1-15 | INV.<br>F25B15/14<br>F25B15/06 |
| A | DE 195 00 335 A1 (KLEMENT ARNE [DE])<br>11. Juli 1996 (1996-07-11)<br>* Spalte 1 - Spalte 7; Abbildungen 1-7 *<br>----- | 1-15 | |
| A | US 4 152 904 A (HESTER JARRETT C)<br>8. Mai 1979 (1979-05-08)<br>* Spalte 3 - Spalte 5; Abbildungen 1, 2 *<br>----- | 1-15 | |

RECHERCHIERTE
SACHGEBIETE (IPC)

F25B

Der vorliegende Recherchenbericht wurde für alle Patentansprüche erstellt

| Recherchenort | Abschlußdatum der Recherche | Prüfer |
|---|---|---|
| München | 29. Januar 2014 | Amous, Moez |

**ANHANG ZUM EUROPÄISCHEN RECHERCHENBERICHT
ÜBER DIE EUROPÄISCHE PATENTANMELDUNG NR.**

EP 13 15 2498

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-01-2014

| Im Recherchenbericht angeführtes Patentdokument | Datum der Veröffentlichung | Mitglied(er) der Patentfamilie | Datum der Veröffentlichung |
|---|---|---|---|
| DE 19511709 A1 | 02-10-1996 | KEINE | |
| DE 19500335 A1 | 11-07-1996 | KEINE | |
| US 4152904 A | 08-05-1979 | US 4062197 A<br>US 4152904 A | 13-12-1977<br>08-05-1979 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2088389 A1